(19) Europäisches Patentamt
European Patent Office
Office européen des brevets

(11) **EP 3 657 407 A1**

(12) **DEMANDE DE BREVET EUROPEEN**

(43) Date de publication:
**27.05.2020   Bulletin 2020/22**

(51) Int Cl.:
***G06Q 10/04*** (2012.01)      ***G06Q 10/10*** (2012.01)
***G06Q 50/06*** (2012.01)

(21) Numéro de dépôt: **19210246.5**

(22) Date de dépôt: **20.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **23.11.2018   FR 1871779**

(71) Demandeur: **Commissariat à l'Energie Atomique et aux Energies Alternatives
75015 Paris (FR)**

(72) Inventeur: **HA, Duy Long
38054 GRENOBLE CEDEX 9 (FR)**

(74) Mandataire: **Cabinet Camus Lebkiri
25 rue de Maubeuge
75009 Paris (FR)**

(54) **PROCÉDÉ D'ENVOI D'UN PROFIL DE PARTICIPATION, PROCÉDÉ DE PILOTAGE ET DISPOSITIFS ASSOCIÉS**

(57)   Un aspect de l'invention concerne un procédé d'envoi d'un profil de participation pour une période donnée dite période de production par un système de gestion d'énergie (SY) à un contrôleur (CO), ladite période étant divisée en une première pluralité de plages horaires, le profil de participation comprenant une information sur l'évolution de la consommation du système de gestion (SY) pour chaque plage horaire de la première pluralité de plages horaires, ledit procédé comprenant : une étape de réception, par le système de gestion (SY), d'une proposition de profil de pénalité émanant du contrôleur (CO), la période de production étant divisée en une deuxième pluralité de plages horaires, le profil de pénalité comportant un coefficient de pénalité associé à la consommation d'énergie pour chaque plage horaire de la deuxième pluralité de plages horaires ; une étape d'optimisation, par le système de gestion (SY), de la consommation d'énergie en fonction de la proposition de profil de pénalité ; une étape de détermination, par le système de gestion (SY), d'un profil de participation en fonction du résultat de l'étape d'optimisation ; et une étape d'envoi, par le système de gestion (SY), du profil de participation au contrôleur (CO).

[Fig. 1]

**Description**

**DOMAINE TECHNIQUE**

La présente invention est relative aux procédés de pilotage d'un ensemble de consommateurs situé sur une grille électrique locale et partageant une source d'énergie locale. La présente invention concerne plus particulièrement un procédé d'envoi d'un profil de participation et un procédé de répartition d'une production d'énergie locale. Elle concerne également les dispositifs associés.

**ÉTAT DE LA TECHNIQUE**

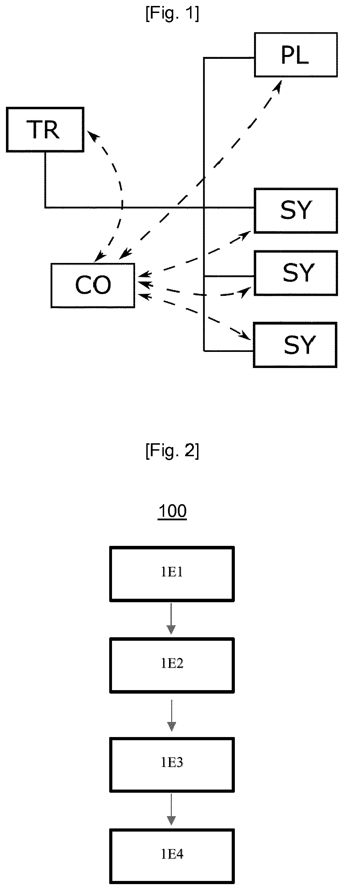

Dans le cadre d'un consortium (équivalent de l'anglais de *pool of prosumer,* c'est-à-dire un regroupement de producteur/consommateur parfois appeler prosommateur) ou regroupement d'habitations favorisant la consommation collective d'une ou plusieurs sources d'énergie locale PL tel qu'illustré à la figure 1, il est nécessaire de coordonner la consommation entre les différents consommateurs (ou habitations) présents sur le réseau. Pour cela, chaque consommateur dispose d'un système de gestion SY responsable de la gestion de l'énergie au niveau dudit consommateur. Le consortium comporte donc une pluralité de systèmes de gestion SY connectée sur une grille électrique locale. Comme mentionnée auparavant, le consortium comprend également au moins une source d'énergie locale PL (par exemple une centrale photovoltaïque ou des panneaux solaires distribués sur différentes habitations). En outre, le consortium est connecté à un réseau électrique de sorte à compléter la production locale par un transformateur TR. Enfin, un contrôleur CO est chargé de s'assurer que la consommation en énergie des systèmes de gestion SY est répartie de sorte à favoriser la consommation d'énergie locale. Pour ce faire, dans l'état de la technique, il est nécessaire que chaque système de gestion SY transmette au contrôleur CO une prévision de consommation pour une période donnée, dite période de production. Si cette façon de faire permet de gérer de manière optimale la ressource en énergie, cette gestion se fait au détriment de la vie privée des consommateurs puisque leurs habitudes peuvent être retracées en fonction de leur consommation.

Il existe donc un besoin d'un procédé qui permettrait de préserver, au moins en partie, la vie privée des consommateurs tout en assurant une bonne gestion de la production en énergie locale.

**RÉSUMÉ DE L'INVENTION**

L'invention propose une solution au problème évoqué ci-dessus au travers de l'utilisation de deux procédés permettant la communication entre les systèmes de gestion et le contrôleur à l'aide d'un profil de participation qui garantit que le minimum d'information est fourni pour la bonne gestion de l'énergie.

Pour cela, un premier aspect de l'invention concerne un procédé d'envoi d'un profil de participation pour une période donnée dite période de production par un système de gestion d'énergie à un contrôleur, ladite période étant divisée en une première pluralité de plages horaires, le profil de participation comprenant une information sur l'évolution de la consommation du système de gestion pour chaque plage horaire de la première pluralité de plages horaires, ledit procédé comprenant :

- une étape de réception, par le système de gestion, d'une proposition de profil de pénalité émanant du contrôleur, la période de production étant divisée en une deuxième pluralité de plages horaires, le profil de pénalité comportant un coefficient de pénalité associé à la consommation d'énergie pour chaque plage horaire de la deuxième pluralité de plages horaires ;
- une étape d'optimisation, par le système de gestion, de la consommation d'énergie en fonction de la proposition de profil de pénalité ;
- une étape de détermination, par le système de gestion, d'un profil de participation en fonction du résultat de l'étape d'optimisation ;
- une étape d'envoi, par le système de gestion, du profil de participation au contrôleur.

Ainsi, le système de gestion n'envoie que les informations strictement nécessaires au contrôleur afin que ce dernier puisse répartir la consommation en énergie. La vie privée des personnes est ainsi préservée tout en assurant un bon fonctionnement de la répartition.

Le procédé selon un premier aspect de l'invention peut également présenter une ou plusieurs des caractéristiques ci-dessous, considérées individuellement ou selon toutes les combinaisons techniquement possibles.

Dans un mode de réalisation, le profil de participation associe à chaque plage horaire de la première pluralité de plages horaires l'une des trois indications suivantes : l'énergie consommée va augmenter ; l'énergie consommée va rester stable ; l'énergie consommée va diminuer.

Un deuxième aspect de l'invention concerne un procédé de pilotage d'une pluralité de systèmes de gestion, ledit procédé comprenant :

- une phase d'initialisation comprenant :

  ▪ une étape de réception, par le contrôleur des prévisions de production d'énergie d'une source d'énergie locale et d'un profil de pénalité d'un réseau électrique ;
  ▪ une étape de détermination, par le contrôleur du nombre de systèmes de gestion participant au partage de l'énergie de la source d'énergie locale et de sélection aléatoire des systèmes de gestion correspondant ;

- une phase d'obtention d'un profil de consommation comprenant :

  ▪ une étape de transmission, par le contrôleur d'une pluralité de profils de pénalité à la pluralité de systèmes de gestion, chaque système de gestion recevant un profil de pénalité, la période de production étant divisée en une deuxième pluralité de plages horaires, le profil de pénalité comportant un coefficient de pénalité associé à la consommation d'énergie pour chaque plage horaire de la deuxième pluralité de plages horaires ;

  ▪ une étape de réception, par le contrôleur, d'une pluralité de profils de participation, chaque profil de participation étant associé à un système de gestion, la période de production étant divisée en une première pluralité de plages horaires, le profil de participation comprenant une information sur l'évolution de la consommation du système de gestion pour chaque plage horaire de la première pluralité de plages horaires ;

  ▪ une étape de détermination, par le contrôleur, à partir de la pluralité de profils de participation, d'un profil de consommation prévisionnel ;

  ▪ une étape de comparaison, par le contrôleur, du profil de consommation prévisionnel à un profil de consommation cible ;

la phase d'obtention d'un profil de consommation étant réitérée jusqu'à ce que l'une des conditions suivantes soit remplie :

- le profil de consommation prévisionnel est identique au profil de consommation cible ;
- la pluralité de profils de participation est identique lors de deux itérations consécutives de la phase d'obtention d'un profil de consommation.

Ainsi, le contrôleur peut mettre en place la répartition de la consommation en énergie entre une pluralité de systèmes de gestion même si ces derniers ne donnent qu'une information incomplète concernant leur consommation en énergie, préservant ainsi la vie privée des utilisateurs du système.

Le procédé selon un deuxième aspect de l'invention peut également présenter une ou plusieurs des caractéristiques ci-dessous, considérées individuellement ou selon toutes les combinaisons techniquement possibles.

Dans un mode de réalisation, le profil de consommation cible est établi en fonction des prévisions de production d'énergie de la source locale.

Le contrôleur s'assure ainsi que la répartition de la consommation en énergie est effectuée de sorte à consommer la totalité de l'énergie produite par la source d'énergie locale.

Dans un mode de réalisation le profil de participation associe à chaque plage horaire de la première pluralité de plages horaires comporte l'une des trois indications suivantes : l'énergie consommée va augmenter ; l'énergie consommée va rester stable ; l'énergie consommée va diminuer.

Les données fournies par les systèmes de gestion de la pluralité de systèmes de gestion sont ainsi limitées au strict minimum.

Un troisième aspect de l'invention concerne un système de gestion de l'énergie d'une installation électrique comprenant les moyens pour mettre en œuvre un procédé selon un premier aspect de l'invention.

Un quatrième aspect de l'invention concerne un contrôleur de pilotage d'une grille électrique locale comprenant des moyens pour mettre en œuvre un procédé selon un deuxième aspect de l'invention.

Un cinquième aspect de l'invention concerne un programme d'ordinateur comprenant des instructions qui, lorsque le programme est exécuté par un système de gestion, respectivement un contrôleur, conduisent celui-ci à mettre en œuvre le procédé selon un premier aspect de l'invention, respectivement le procédé selon un deuxième aspect de l'invention.

Un sixième aspect de l'invention concerne un support de données lisible par ordinateur, sur lequel est enregistré le programme d'ordinateur selon un cinquième aspect de l'invention.

**BRÈVE DESCRIPTION DES FIGURES**

D'autres caractéristiques et avantages de l'invention ressortiront clairement de la description qui en est donnée ci-dessous, à titre indicatif et nullement limitatif, en référence aux figures annexées, parmi lesquelles :

La figure 1 qui montre une représentation schématique d'un consortium susceptible d'être géré par un procédé selon un premier et un deuxième aspect de l'invention ;

La figure 2 qui représente un ordinogramme d'un procédé selon un premier aspect de l'invention ;

La figure 3 qui représente un profil de participation ainsi qu'un profil cible reconstitué à partir dudit profil de participation ;

La figure 4 qui représente un ordinogramme d'un procédé selon un deuxième aspect de l'invention.

Pour plus de clarté, les éléments identiques ou similaires sont repérés par des signes de référence identiques sur l'ensemble des figures.

## DESCRIPTION DÉTAILLÉE D'AU MOINS UN MODE DE RÉALISATION

La figure 2 représente un premier mode de réalisation d'un procédé 100 d'envoi d'un profil de participation pour une période donnée dite période de production par un système de gestion d'énergie SY à un contrôleur CO selon un premier aspect de l'invention. Par exemple, la période de production pourra être d'une durée de 24h. Dans la suite, un système de gestion SY devra être compris comme un dispositif contrôlant l'alimentation en énergie électrique d'une installation électrique (par exemple une habitation, un bâtiment collectif, une usine, etc.). La consommation en énergie d'un système de gestion SY correspond donc à la consommation en énergie de ladite installation électrique.

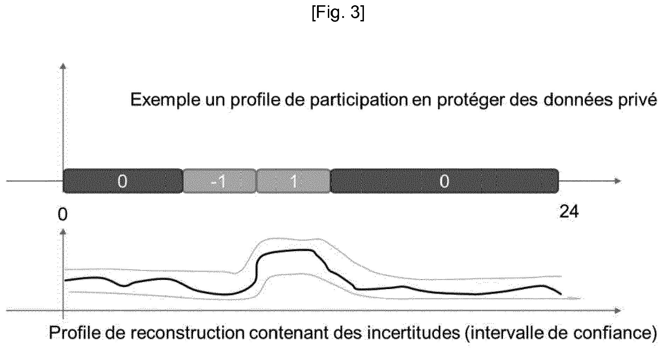

Le profil de participation transmis au contrôleur CO par le système de gestion SY comprend une information sur l'évolution de la consommation du système de gestion SY au cours du temps durant la période de production. Plus particulièrement, la période de production est divisée en une première pluralité de plages horaires, les plages horaires de la première pluralité de plages horaires ayant par exemple une durée identique. Dans un mode de réalisation la durée d'une plage horaire est supérieure ou égale à une minute. Dans un mode de réalisation, la durée d'une plage horaire est supérieure ou égale à une heure. En outre, le profil de participation comprend une information sur l'évolution de la consommation du système de gestion SY pour chaque plage horaire de la pluralité de plages horaires, l'évolution associée à une plage horaire étant relative à la consommation durant la plage horaire précédente. Dans un mode de réalisation, le profil de participation associe à chaque plage horaire de la première pluralité de plages horaires l'une des trois indications suivantes : l'énergie consommée va augmenter ; l'énergie consommée va rester stable ; et l'énergie consommée va diminuer. Un exemple d'un tel profil est représenté à la figure 3 pour une période de production d'une durée de 24h dans lequel le profil peut comporter trois informations différentes codées par trois chiffres : 0, 1 ou -1 (bien entendu, d'autres chiffres pourraient être utilisés). Le chiffre 0 signifie que le système de gestion SY prévoit de ne pas modifier sa consommation sur la plage horaire concernée. Le chiffre -1 signifie que le système de gestion SY prévoit de diminuer sa consommation sur la plage horaire concernée relativement à la consommation durant la plage horaire précédente. Enfin, le chiffre 1 signifie que le système de gestion SY prévoit d'augmenter sa consommation sur la plage horaire concernée relativement à la consommation durant la plage horaire précédente. Dans l'exemple de la figure 3, la consommation va tout d'abord restée inchangée (ici, comme il s'agit de la première plage de la période de production, la variation est relative à la dernière plage de la période de production précédente), puis baisser pour ensuite augmenter pour enfin se stabiliser. A partir de cette information, le contrôleur peut reconstituer un profil de consommation prévisionnel (la courbe noire), cette reconstitution étant associée à une marge d'erreur (les deux courbes en gris encadrant la courbe noire). La manière de reconstruire le profil de consommation prévisionnel sera détaillée dans la suite. Il est bien entendu possible d'envisager d'autres façons de fournir un profil de participation, par exemple en indiquant des fourchettes d'augmentation. Dans un tel profil, le système de gestion SY précise par exemple l'évolution de sa consommation en pourcentage plus ou moins une incertitude pour chaque plage horaire. D'autres solutions sont bien entendu envisageables. Le but du profil de participation n'est donc pas de fournir la consommation exacte envisagée par le système de gestion SY mais seulement son évolution. Cela présente un avantage certains en termes de confidentialité des données : le contrôleur CO n'a pas accès à la consommation en énergie du système de gestion SY.

Le procédé 100 selon un premier aspect de l'invention comprend une étape 1E1 de réception, par le système de gestion SY, d'une proposition de profil de pénalité émanant du contrôleur CO, le profil de pénalité comportant un coefficient de pénalité associé à la consommation d'énergie en fonction du temps. L'élaboration du profil de pénalité par le contrôleur CO sera détaillée dans la suite, lors de la description d'un procédé 200 de pilotage selon un deuxième aspect de l'invention. Afin de comprendre le procédé 100 selon un premier aspect de l'invention, il est suffisant de savoir que le profil de pénalité correspond à une évolution d'une pénalité en fonction du temps. Autrement dit, la période de production est divisée en une deuxième pluralité de plages horaires, les plages horaires de la deuxième pluralité de plages horaires ayant de préférence une durée identique, et le profil de pénalité associe à chaque plage horaire de la deuxième pluralité de plages horaires un coefficient de pénalité à la consommation d'énergie sur ladite plage. Une possibilité est de choisir un coefficient de pénalité qui est fonction du prix de l'énergie et/ou le taux de rejet de $CO_2$ associé à l'énergie pour la plage horaire considérée. De manière plus générale, le coefficient de pénalité pourra être représentatif de l'abondance (ou de la rareté) de l'énergie ou bien encore son caractère plus ou moins polluant sur la plage horaire considérée et/ou de la demande en énergie sur la plage horaire considérée. On comprend donc que le coefficient de pénalité est avant tout un outil permettant de réguler la consommation en énergie au cours du temps. Dans un mode de réalisation, la division en plage horaire du profil de pénalité et du profil de participation est identique.

Le procédé 100 comprend ensuite une étape 1E2 d'optimisation, par le système de gestion SY, de la consommation d'énergie en fonction de la proposition de profil de pénalité. Autrement dit, le système de gestion SY va répartir sa consommation au cours de la période de production concernée de sorte à minimiser la pénalité de consommation sur ladite période. Cette optimisation peut notamment consister à chauffer l'eau d'un ballon d'eau chaude lorsque la pénalité est la plus faible. De même, lorsqu'une solution de stockage de l'énergie est disponible, cette dernière sera chargée lorsque la pénalité est faible et déchargée lorsque la pénalité est élevée. Les méthodes d'optimisation de la consommation en énergie sont connues de l'homme du métier et ne seront donc pas davantage détaillées ici. Le lecteur pourra par exemple se référé au document « An optimal approach for electrical management problem in dwellings », DL Ha, H Joumaa, S Ploix, M Jacomino - Energy and Buildings, 2012.

Le procédé 100 comprend ensuite une étape 1E3 de détermination, par le système de gestion SY, d'un profil de participation en fonction du résultat de l'étape 1 E2 d'optimisation. En effet, une fois l'optimisation effectuée, le système de gestion SY sait quelle va être sa consommation au cours du temps et peut donc également déterminer son évolution d'une plage horaire à l'autre (c'est-à-dire déterminer le profil de participation).

Le procédé 100 comprend enfin une étape 1E4 d'envoi, par le système de gestion SY, du profil de participation au contrôleur CO. Comme déjà mentionné, l'envoi ne concerne que l'évolution de la consommation entre deux plages horaires et ne donne aucune information quant à la consommation du système de gestion SY proprement dite. Autrement dit, un procédé 100 selon un premier aspect de l'invention permet au contrôleur CO de recevoir les informations strictement nécessaires à l'élaboration d'une répartition d'énergie. Cette élaboration va maintenant être décrite.

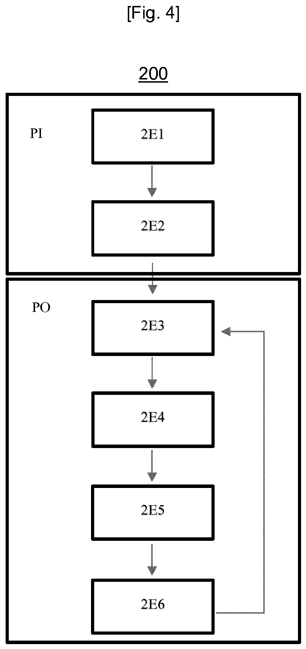

Le procédé 200 selon un deuxième aspect de l'invention illustré en figure 4 concerne un procédé de pilotage par un contrôleur CO d'une pluralité de systèmes de gestion SY. Un système de gestion SY pourra par exemple être disposé dans chaque habitation d'un quartier, le contrôleur CO étant alors responsable de la répartition de la consommation au sein dudit quartier, ledit quartier étant au moins en partie alimenté à l'aide d'une source d'énergie locale. La source d'énergie locale peut par exemple provenir d'une centrale photovoltaïque PL ou éolienne PL. De manière alternative ou complémentaire, le moyen de production locale pourra comprendre des panneaux solaires distribués sur une pluralité de bâtiments. Le quartier pourra également être connecté au réseau électrique par l'intermédiaire d'un transformateur TR de manière à compléter les besoins en énergie lorsque ces derniers ne peuvent pas être entièrement satisfaits à partir de la production locale.

Le procédé 200 selon un deuxième aspect de l'invention est divisé en deux phases : une phase PI d'initialisation et une phase PO d'obtention d'un profil de consommation.

La phase d'initialisation PI comprend une étape 2E1 de réception des prévisions de production en énergie d'au moins une source locale et d'un profil de pénalité d'un réseau électrique, par exemple le réseau électrique national. Comme pour le profil de pénalité généré par le contrôleur CO, le profil de pénalité caractérise l'évolution du coefficient de pénalité au cours du temps pour la période de production considérée. La prévision de production en énergie de la source locale PL peut être déterminée à partir de données météorologiques, notamment en fonction de l'ensoleillement et/ou de la force et de la direction du vent. Le profil de pénalité concernant le réseau électrique peut par exemple être fourni par l'opérateur ou les opérateurs dudit réseau.

La phase d'initialisation PI comprend ensuite une étape 2E2 de détermination du nombre de systèmes de gestion SY participant au partage de l'énergie de production locale PL et de sélection aléatoire des systèmes de gestion SY correspondant. Par exemple, si le nombre de participants nécessaire est de trois, alors le contrôleur CO va sélectionner aléatoirement trois systèmes de gestion SY qui participeront à la consommation de la production locale PL. Le caractère aléatoire de la sélection permet d'augmenter la confidentialité de la consommation de chaque système de gestion SY, des systèmes de gestion SY différents étant choisis à chaque sélection (sauf cas rares où la sélection aléatoire conduit à la sélection des mêmes systèmes SY sur deux périodes de production consécutives). Cela suppose donc que la consommation de ces trois systèmes de gestion SY est suffisante pour absorber la totalité de l'énergie fournie par le moyen de production local PL. Cela suppose également que la consommation moyenne des systèmes de gestion SY de la pluralité de systèmes de gestion SY est connue, la détermination du nombre de systèmes de gestion SY participant au partage nécessitant une information sur la probable consommation desdits systèmes SY. Cette consommation moyenne pourra par exemple être déterminée à partir de l'historique des consommations. En effet, au fil des périodes de production, le contrôleur CO va pouvoir constituer un historique permettant de déduire la consommation moyenne de chaque système de gestion SY. Si un tel historique n'existe pas, il est également possible d'estimer ce profil à partir d'informations relatives à chaque système de gestion SY, comme la surface alimentée par ledit système SY, le nombre d'occupants associé audit système SY, l'abonnement dont bénéficie ledit système SY (et qui donne l'énergie maximale par unité de temps que peut consommer ledit système), etc.

Le but de la phase PI initiale est donc de connaître le nombre de participants au partage de la production locale PL et de sélectionner aléatoirement le ou les systèmes de gestion SY qui y participeront. Une fois ces informations connues, il est possible d'obtenir un profil de consommation, c'est-à-dire la consommation en énergie de l'ensemble des systèmes de gestion SY de la pluralité de systèmes de gestion pour la période de production considérée (y compris ce qui ne contribue pas au partage de l'énergie produite localement).

Pour cela, la phase PO d'obtention d'un profil de consommation comprend une étape 2E3 de transmission d'une pluralité de profil de pénalité à la pluralité de systèmes de gestion SY, chaque système de gestion SY

recevant un profil de pénalité, la période de production étant divisée en une deuxième pluralité de plages horaires, le profil de pénalité comportant un coefficient de pénalité associé à la consommation d'énergie pour chaque plage horaire de la deuxième pluralité de plages horaires. La pluralité de profils de pénalité est générée de sorte à induire une consommation chez la pluralité de système de gestion SY conforme à un profil de consommation cible. Ce profil de consommation cible est tel que la totalité de l'énergie produite localement est consommée. Il vise également à limiter la consommation sur le réseau électrique lorsque le coefficient de pénalité est élevé. Autrement dit, la consommation cible vise à faire correspondre la demande en énergie aux périodes durant lesquelles l'énergie est disponible en plus grande quantité. Dans un mode de réalisation, le coefficient de pénalité associé à une plage horaire donnée est fonction de l'énergie consommé sur ladite plage. Par exemple, le coefficient de pénalité pourra être faible si la quantité d'énergie consommée est en dessous d'un seuil, et élevée si cette dernière est au-dessus dudit seuil.

Comme on l'a vu dans le cadre du procédé 100 selon un premier aspect de l'invention, chaque système de gestion SY va recevoir un profil de pénalité et déterminer, à partir de ce profil de pénalité, un profil de participation avant de l'envoyer au contrôleur CO qui va ensuite les recevoir et les analyser.

Pour cela, la phase PO d'obtention d'un profil de consommation comprend une étape 2E4 de réception d'une pluralité de profils de participation, chaque profil de participation étant associé à un système de gestion SY, la période de production étant divisée en une première pluralité de plages horaires, le profil de participation comprenant une information sur l'évolution de la consommation du système de gestion SY pour chaque plage horaire de la première pluralité de plages horaires. On notera que la première pluralité de plages horaires peut être différente pour chaque système de gestion SY.

Elle comprend ensuite une étape 2E5 de détermination, à partir de la pluralité de profils de participation d'un profil de consommation prévisionnel. Afin d'établir ce profil de consommation prévisionnel, le contrôleur CO peut analyser les profils de consommation obtenus lors de périodes de production précédentes. Comme déjà mentionné, au fil des périodes de production, le contrôleur CO va pouvoir constituer un historique permettant, à partir d'une pluralité de profils de participation, de déterminer un profil de consommation prévisionnel. Si un tel historique n'existe pas, il est également possible d'estimer ce profil à partir d'informations relatives à chaque système de gestion SY, comme la surface alimentée par ledit système, le nombre d'occupants associé audit système SY, l'abonnement dont bénéficie ledit système SY (et qui donne l'énergie maximale par unité de temps que peut consommer ledit système), etc.

Une fois le profil de consommation prévisionnel déterminé, il est nécessaire de s'assurer que ce dernier remplit l'objectif souhaité ou au moins s'en rapproche.

Pour cela, la phase PO d'obtention d'un profil de consommation comprend ensuite une étape 2E6 de comparaison du profil de consommation prévisionnel à un profil de consommation cible. De préférence, le profil de consommation cible est établie en fonction des prévisions de production d'énergie de la source locale PL. Ainsi, il est possible de s'assurer à travers le profil cible que la production de la source locale PL est favorisée dans la consommation d'énergie.

Il est possible d'identifier deux situations satisfaisantes. Dans une première situation, le profil de consommation prévisionnel est identique au profil de consommation cible. On entend par identique que

$$\sum_{k=1}^{K}\left|P_{prev}(k) - P_{cible}(k)\right| \le \varepsilon$$

où $P_{prev}(k)$ est le profil de consommation prévisionnel sur la plage horaire $k$ et $P_{cible}(k)$ est le profil de consommation cible sur la plage horaire $k$, $K$ étant le nombre total de plages horaires sur la période de production, et $\varepsilon$ un seuil prédéfini.

C'est évidemment la situation la plus souhaitable, car elle permet de s'assurer que les objectifs ont été atteints, notamment en termes de consommation de l'énergie produite localement. Il se peut cependant que le profil de consommation cible ne soit pas atteint. Dans ce cas, une deuxième situation possible est celle dans laquelle la pluralité de profils de participation est identique lors de deux itérations de la phase d'obtention d'un profil de consommation consécutives ; ce qui suppose évidemment que deux itérations de la phase PO d'obtention d'un profil de consommation ont été effectuées. Autrement dit, lorsqu'il ne semble pas possible d'atteindre le profil de consommation cible, le profil prévisionnel correspondant au meilleur compromis est choisi.

Dans un procédé 200 selon un deuxième aspect de l'invention, la phase PO d'obtention d'un profil de consommation est donc réitérée jusqu'à ce que l'une de ces deux situations (ou conditions) soit remplie. Afin de déterminer le profil de pénalité envoyé à chaque système de gestion au cours de chaque itération de la phase PO d'obtention, le procédé pourra par exemple faire appel à un algorithme ADMM (pour alternating direction method of multipliers). Les détails de cet algorithme sont notamment donnés dans « An ADMM approach to dynamic sharing problems », Cao et al, 52nd Annual Conférence on Information Sciences and Systems (CISS), 2018. Bien entendu, il ne s'agit que d'un exemple et d'autres méthodes d'optimisation peuvent être utilisées.

Dans un mode de réalisation d'un procédé 200 selon un deuxième aspect de l'invention, le profil de participation associe à chaque plage horaire l'une des trois indications suivantes : l'énergie consommée va augmenter ; l'énergie consommée va rester stable ; l'énergie consommée va diminuer. Ainsi, les informations fournies par chaque système de gestion SY au contrôleur CO est minimale tout en permettant à ce dernier de déterminer un profil de consommation prévisionnel.

Dans un mode de réalisation, la période de production à une durée de 24h.

Un troisième aspect de l'invention concerne un système de gestion SY comportant les moyens pour mettre en œuvre un procédé 100 selon un premier aspect de l'invention. Dans un mode de réalisation, le système de gestion SY comprend un moyen de calcul (par exemple un processeur) associé à une mémoire (par exemple une mémoire RAM et/ou un disque dur). La mémoire est notamment configurée pour stocker les instructions nécessaires à la mise en œuvre d'un procédé 100 selon un premier aspect de l'invention ainsi que les données nécessaires à cette mise en œuvre. Dans un mode de réalisation, le système de gestion SY comprend un moyen de communication (par exemple un moyen de communication GSM, WiFi, Bluethooth ou bien encore par technique CPL) de sorte à pouvoir recevoir des données d'un contrôleur CO ou envoyer des données audit contrôleur CO.

Un quatrième aspect de l'invention concerne un contrôleur CO comprenant des moyens pour mettre en œuvre un procédé 200 selon un deuxième aspect de l'invention. Dans un mode de réalisation, le contrôleur CO comprend un moyen de calcul (par exemple un processeur) associé à une mémoire (par exemple une mémoire RAM et/ou un disque dur). La mémoire est notamment configurée pour stocker les instructions nécessaires à la mise en œuvre d'un procédé 200 selon un deuxième aspect de l'invention ainsi que les données nécessaires à cette mise en œuvre. Dans un mode de réalisation, le contrôleur CO comprend un moyen de communication (par exemple un moyen de communication GSM, WiFi, Bluethooth ou bien encore par technique CPL) de sorte à pouvoir recevoir des données d'un ou plusieurs systèmes de gestion contrôleur ou envoyer des données audit ou auxdits systèmes de gestion. Il comporte également un moyen de communication de sorte à pouvoir recevoir des informations de la source de production locale (par exemple recevoir les prévisions de production) ou du réseau électrique (par exemple le profil de pénalité associé à l'énergie sur le réseau).

Naturellement, l'invention n'est pas limitée aux modes de réalisation décrits en référence aux figures et des variantes pourraient être envisagées sans sortir du cadre de l'invention.

## Revendications

1. Procédé (100) d'envoi d'un profil de participation pour une période donnée dite période de production par un système de gestion d'énergie (SY) à un contrôleur (CO), ladite période étant divisée en une première pluralité de plages horaires, le profil de participation comprenant une information sur l'évolution de la consommation du système de gestion (SY) pour chaque plage horaire de la première pluralité de plages horaires, ledit procédé (100) comprenant :

  - une étape (1E1) de réception, par le système de gestion (SY), d'une proposition de profil de pénalité émanant du contrôleur (CO), la période de production étant divisée en une deuxième pluralité de plages horaires, le profil de pénalité comportant un coefficient de pénalité associé à la consommation d'énergie pour chaque plage horaire de la deuxième pluralité de plages horaires ;
  - une étape (1E2) d'optimisation, par le système de gestion (SY), de la consommation d'énergie du système pour la période de production considérée en fonction de la proposition de profil de pénalité ;
  - une étape (1E3) de détermination, par le système de gestion (SY), du profil de participation en fonction du résultat de l'étape (1E2) d'optimisation ;
  - une étape d'envoi (1E4), par le système de gestion (SY), du profil de participation au contrôleur (CO).

2. Procédé (200) de pilotage par un contrôleur (CO) d'une pluralité de systèmes de gestion (SY), ledit procédé (200) comprenant :

  - une phase (PI) d'initialisation comprenant :

    ▪ une étape (2E1) de réception, par le contrôleur (CO) des prévisions de production d'énergie d'une source d'énergie locale (PL) et d'un profil de pénalité d'un réseau électrique ;
    ▪ une étape (2E2) de détermination, par le contrôleur (CO) du nombre de systèmes de gestion (SY) participant au partage de l'énergie de la source locale et de sélection aléatoire des systèmes de gestion (SY) correspondant ;

  - une phase (PO) d'obtention d'un profil de consommation comprenant :

    ▪ une étape (2E3) de transmission, par le contrôleur (CO) d'une pluralité de profils de pénalité à la pluralité de systèmes de gestion (SY), chaque système de gestion (SY) recevant un profil de pénalité, la période de production étant divisée en une deuxième pluralité de plages horaires, le profil de pénalité comportant un coefficient de pénalité associé à la consommation d'énergie pour chaque plage horaire de la deuxième pluralité de plages horaires ;

■ une étape (2E4) de réception, par le contrôleur (CO), d'une pluralité de profils de participation, chaque profil de participation étant associé à un système de gestion (SY), la période de production étant divisée en une première pluralité de plages horaires, le profil de participation comprenant une information sur l'évolution de la consommation du système de gestion (SY) pour chaque plage horaire de la première pluralité de plages horaires ;

■ une étape (2E5) de détermination, par le contrôleur (CO), à partir de la pluralité de profils de participation, d'un profil de consommation prévisionnel ;

■ une étape (2E6) de comparaison, par le contrôleur (CO), du profil de consommation prévisionnel à un profil de consommation cible ;

la phase (PO) d'obtention d'un profil de consommation étant réitérée jusqu'à ce que l'une des conditions suivantes soit remplie :

- le profil de consommation prévisionnel est identique au profil de consommation cible ;
- la pluralité de profils de participation est identique lors de deux itérations consécutives de la phase (PO) d'obtention d'un profil de consommation.

3. Procédé (200) selon la revendication précédente **caractérisé en ce que** le profil de consommation cible est établi en fonction des prévisions de production d'énergie de la source locale (PL).

4. Procédé (100,200) selon l'une des revendications précédentes **caractérisée en ce que** le profil de participation associe à chaque plage horaire de la première pluralité de plages horaires l'une des trois indications suivantes :

- l'énergie consommée va augmenter ;
- l'énergie consommée va rester stable ;
- l'énergie consommée va diminuer.

5. Système de gestion de l'énergie (SY) d'une installation électrique comprenant les moyens pour mettre en œuvre un procédé (100) selon la revendication 1 ou la revendication 4 dans sa dépendance à la revendication 1.

6. Contrôleur (CO) de pilotage d'une grille électrique locale comprenant des moyens pour mettre en œuvre un procédé (200) selon la revendication 2, la revendication 3 ou la revendication 4 dans sa dépendance à la revendication 2 ou à la revendication 3.

7. Programme d'ordinateur comprenant des instructions qui, lorsque le programme est exécuté par un système de gestion (SY), respectivement un contrôleur (CO), conduisent celui-ci à mettre en œuvre le procédé (100) selon la revendication 1 ou la revendication 4 dans sa dépendance à la revendication 1, respectivement le procédé (200) selon la revendication 2, la revendication 3 ou la revendication 4 dans sa dépendance à la revendication 2 ou à la revendication 3.

8. Support de données lisible par ordinateur, sur lequel est enregistré le programme d'ordinateur selon la revendication précédente.

[Fig. 1]

[Fig. 2]

100

[Fig. 3]

Exemple un profile de participation en protéger des données privé

0      -1      1      0

0      24

Profile de reconstruction contenant des incertitudes (intervalle de confiance)

[Fig. 4]

<u>200</u>

Europäisches
Patentamt

European
Patent Office

Office européen
des brevets

# RAPPORT DE RECHERCHE EUROPEENNE

Numéro de la demande

EP 19 21 0246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/130556 A1 (MARHOEFER JOHN J [US]) 24 mai 2012 (2012-05-24) * abrégé * * alinéas [0027] - [0038] * * alinéas [0054] - [0070]; figures 1,2 * | 1-8 | INV. G06Q10/04 G06Q10/10 G06Q50/06 |
| X | US 2011/288905 A1 (MRAKAS CHRIS [AU]) 24 novembre 2011 (2011-11-24) * abrégé * * alinéas [0008] - [0048] * * alinéas [0054] - [0078]; figure 1 * | 1-8 | |
| A | US 8 417 391 B1 (ROMBOUTS JAN-WILLEM [BE] ET AL) 9 avril 2013 (2013-04-09) * abrégé * * colonne 3, ligne 37 - colonne 5, ligne 47 * | 1-8 | |
| A | US 2004/215529 A1 (FOSTER ANDRE E [US] ET AL) 28 octobre 2004 (2004-10-28) * abrégé * * alinéas [0003] - [0005] * * alinéas [0047] - [0060]; figure 2 * * alinéas [0061] - [0078]; figure 3 * | 1-8 | DOMAINES TECHNIQUES RECHERCHES (IPC)<br><br>G06Q |
| A | WO 03/058396 A2 (ABB RESEARCH LTD [CH]; BAYOUMI DEIA SALAH-ELDIN [US] ET AL.) 17 juillet 2003 (2003-07-17) * abrégé * * page 4, ligne 27 - page 5, ligne 15 * | 1,2,5-8 | |
| A | US 2011/071882 A1 (JAKAGNANAM JAYANT R [US] ET AL) 24 mars 2011 (2011-03-24) * abrégé * * alinéas [0006] - [0024] * * alinéa [0043] * * alinéas [0058] - [0066]; figure 2 * | 1,2,5-8 | |

-/--

Le présent rapport a été établi pour toutes les revendications

| Lieu de la recherche | Date d'achèvement de la recherche | Examinateur |
|---|---|---|
| Munich | 4 février 2020 | Dedek, Frédéric |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 21 0246

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 255 594 A1 (SCHNEIDER ELECTRIC IND SAS [FR]) 13 décembre 2017 (2017-12-13)<br>* abrégé *<br>* alinéas [0013] - [0022] *<br>* alinéas [0028] - [0065]; figure ,2 *<br>----- | 1,2,5-8 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 4 février 2020 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**
EP 19 21 0246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2020

| Document brevet cité au rapport de recherche | Date de publication | Membre(s) de la famille de brevet(s) | Date de publication |
|---|---|---|---|
| US 2012130556 A1 | 24-05-2012 | US 2012130556 A1<br>US 2016172859 A1<br>WO 2012068388 A1 | 24-05-2012<br>16-06-2016<br>24-05-2012 |
| US 2011288905 A1 | 24-11-2011 | AU 2010213340 A1<br>AU 2016204772 A1<br>AU 2018267588 A1<br>CA 2752094 A1<br>EP 2396762 A1<br>NZ 594989 A<br>US 2011288905 A1<br>WO 2010091450 A1 | 22-09-2011<br>28-07-2016<br>06-12-2018<br>19-08-2010<br>21-12-2011<br>30-04-2014<br>24-11-2011<br>19-08-2010 |
| US 8417391 B1 | 09-04-2013 | AU 2012351792 A1<br>AU 2016204102 A1<br>AU 2016204105 A1<br>AU 2017208349 A1<br>DK 2721708 T3<br>EP 2721708 A2<br>ES 2555290 T3<br>JP 5937228 B2<br>JP 6182238 B2<br>JP 2015506031 A<br>JP 2016167300 A<br>NZ 625958 A<br>NZ 716617 A<br>NZ 721234 A<br>PL 2721708 T3<br>US 8417391 B1<br>US 2013178991 A1<br>US 2013178993 A1<br>US 2015057824 A1<br>WO 2013088229 A2 | 03-07-2014<br>07-07-2016<br>07-07-2016<br>17-08-2017<br>07-12-2015<br>23-04-2014<br>30-12-2015<br>22-06-2016<br>16-08-2017<br>26-02-2015<br>15-09-2016<br>27-05-2016<br>26-08-2016<br>31-03-2017<br>31-03-2016<br>09-04-2013<br>11-07-2013<br>11-07-2013<br>26-02-2015<br>20-06-2013 |
| US 2004215529 A1 | 28-10-2004 | AUCUN | |
| WO 03058396 A2 | 17-07-2003 | AU 2002364915 A1<br>WO 03058396 A2 | 24-07-2003<br>17-07-2003 |
| US 2011071882 A1 | 24-03-2011 | US 2011071882 A1<br>US 2013013376 A1 | 24-03-2011<br>10-01-2013 |
| EP 3255594 A1 | 13-12-2017 | CN 107492912 A<br>EP 3255594 A1<br>FR 3052579 A1<br>US 2017358928 A1 | 19-12-2017<br>13-12-2017<br>15-12-2017<br>14-12-2017 |

Pour tout renseignement concernant cette annexe : voir Journal Officiel de l'Office européen des brevets, No.12/82

EPO FORM P0460

page 1 de 2

**ANNEXE AU RAPPORT DE RECHERCHE EUROPEENNE
RELATIF A LA DEMANDE DE BREVET EUROPEEN NO.**

EP 19 21 0246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-02-2020

| Document brevet cité au rapport de recherche | Date de publication | Membre(s) de la famille de brevet(s) | Date de publication |
|---|---|---|---|
| ------------------------------------------------------------------------------------------------ | | | |

Pour tout renseignement concernant cette annexe : voir Journal Officiel de l'Office européen des brevets, No.12/82

EPO FORM P0460

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DL HA ; H JOUMAA ; S PLOIX ; M JACOMINO.** An optimal approach for electrical management problem in dwellings. *Energy and Buildings,* 2012

- An ADMM approach to dynamic sharing problems. **CAO et al.** 52nd Annual Conférence on Information Sciences and Systems (CISS). 2018